(19) Europäisches Patentamt

European Patent Office

Office européen des brevets

(11) **EP 3 940 021 A1**

(12) **DEMANDE DE BREVET EUROPEEN**

(43) Date de publication:
**19.01.2022 Bulletin 2022/03**

(21) Numéro de dépôt: **21187016.7**

(22) Date de dépôt: **21.06.2018**

(51) Classification Internationale des Brevets (IPC):
**C08J 5/10** (2006.01)     **C08J 5/24** (2006.01)
**C08J 5/04** (2006.01)     **C08K 3/04** (2006.01)

(52) Classification Coopérative des Brevets (CPC):
**C08J 5/10; C08J 5/042; C08J 5/043;**
C08J 2371/02; C08J 2377/00; C08J 2377/04;
C08J 2379/08; C08J 2381/04; C08J 2400/12

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.06.2017 FR 1755702**

(62) Numéro(s) de document de la (des) demande(s) initiale(s) en application de l'article 76 CBE:
**19204501.1 / 3 617 254**
**18178994.2 / 3 418 323**

(71) Demandeur: **ARKEMA FRANCE**
**92700 Colombes (FR)**

(72) Inventeurs:
• **HOECHSTETTER, Gilles**
**92700 COLOMBES (FR)**

• **CAPELOT, Mathieu**
**64170 LACQ (FR)**
• **HUZE, Denis**
**27470 SERQUIGNY (FR)**
• **TANGUY, François**
**92700 COLOMBE (FR)**
• **SAVART, Thibaut**
**64170 LACQ (FR)**
• **BABEAU, Arthur**
**64170 LACQ (FR)**
• **GAILLARD, Patrice**
**64170 LACQ (FR)**

Remarques:
Cette demande a été déposée le 21-07-2021 comme demande divisionnaire de la demande mentionnée sous le code INID 62.

(54) **MATERIAU FIBREUX IMPREGNE DE POLYMERE THERMOPLASTIQUE**

(57) La présente invention concerne un matériau fibreux imprégné comprenant un matériau fibreux en fibres continues et au moins une matrice polymère thermoplastique, caractérisé en en ce que ledit au moins polymère thermoplastique est un polymère amorphe non réactif dont la température de transition vitreuse est telle que $Tg \geq 80°C$, notamment $Tg \geq 100°C$, en particulier $\geq 120°C$, notamment $\geq 140°C$, ou un polymère semi-cristallin non réactif dont la température de fusion $Tf \geq 150°C$, le taux de fibres en volume est constant dans au moins 70% du volume de la bande ou ruban, notamment dans au moins 80% du volume de la bande ou ruban, en particulier dans au moins 90% du volume de la bande ou ruban, plus particulièrement dans au moins 95% du volume de la bande ou ruban, le taux de fibres dans ledit matériau fibreux pré-imprégné étant compris de 45 à 65 % en volume, de préférence de 50 à 60% en volume, notamment de 54 à 60% sur les deux faces dudit matériau fibreux, le taux de porosité dans ledit matériau fibreux pré-imprégné étant inférieur à 10%, notamment inférieur à 5%, en particulier inférieur à 2%.

EP 3 940 021 A1

**Description**

[Domaine de l'invention]

La présente invention concerne un matériau fibreux, notamment monocouche, imprégné de polymère thermoplastique.

Plus particulièrement, l'invention se rapporte à un matériau fibreux, notamment monocouche, imprégné de polymère thermoplastique, en particulier le nombre de fibres pour des fibres de carbone supérieur ou égal à 30K, notamment supérieur ou égal à 50K, ou le grammage pour la fibre de verre est supérieur ou égal à 1200 Tex, et dont le taux de fibres en volume est notamment constant, en particulier le taux de fibres en volume est constant dans au moins 70% du volume de la bande ou ruban.

Dans la présente description, on entend par « matériau fibreux » un assemblage de fibres de renfort. Avant sa mise en forme, il se présente sous forme de mèches. Après sa mise en forme, il se présente sous forme de bandes (ou tape), de ruban ou de nappes. Lorsque les fibres de renfort sont continues, leur assemblage constitue un renfort unidirectionnel ou un tissu ou un non tissé (NCF). Lorsque les fibres sont courtes, leur assemblage constitue un feutre ou un mat de fibres.

De tels matériaux fibreux imprégnés sont notamment destinés à la réalisation de matériaux composites légers pour la fabrication de pièces mécaniques ayant une structure à trois dimensions et possédant de bonnes propriétés mécaniques et thermiques. Lorsque les fibres sont en carbone ou que la résine est chargée d'additifs adaptés, ces matériaux fibreux sont capables d'évacuer des charges électrostatiques. L'utilisation de résines ignifuges ou d'additifs ignifuges dans des résines qui ne le sont pas, permettent aux matériaux fibreux imprégnés d'être résistants au feu. Ils possèdent donc des propriétés compatibles avec la fabrication de pièces notamment dans les domaines de la mécanique, de l'aéronautique, du nautique, de l'automobile, du pétrole et du gaz, en particulier l'offshore, du stockage de gaz, de l'énergie, de la santé et du médical, des sports et loisirs et de l'électronique.

De tels matériaux fibreux imprégnés sont également appelés matériaux composites. Ils comprennent le matériau fibreux, constitué des fibres de renfort, et d'une matrice constituée par le polymère imprégnant les fibres. Le premier rôle de cette matrice est de maintenir les fibres de renfort dans une forme compacte et de donner la forme voulue au produit final. Cette matrice assure également le transfert de charge entre les fibres et donc, conditionne la résistance mécanique du composite. Une telle matrice sert également à protéger les fibres de renfort contre l'abrasion et un environnement agressif, à contrôler l'aspect de surface et à disperser d'éventuelles charges entre les fibres. Le rôle de cette matrice est important pour la tenue à long terme du matériau composite, notamment en ce qui concerne la fatigue et le fluage.

[Art antérieur]

Une bonne qualité des pièces composites tridimensionnelles fabriquées à partir de matériaux fibreux imprégnés passe notamment par une maîtrise du procédé d'imprégnation des fibres de renfort par le polymère thermoplastique et donc du matériau fibreux imprégné obtenu. Dans la présente description, on utilise le terme « bande » pour désigner des bandes de matériau fibreux dont la largeur est supérieure ou égale à 400mm. On utilise le terme « ruban » pour désigner des rubans de largeur calibrée et inférieure ou égale à 400mm.

Le terme « mèche » est également employé pour désigner le matériau fibreux.

Jusqu'à présent, la fabrication de bandes de matériaux fibreux renforcées par imprégnation de polymère thermoplastique ou de polymère thermodurcissable s'effectuait suivant plusieurs procédés qui dépendent notamment de la nature du polymère, du type de matériau composite final souhaité et de son domaine d'applications, certains de ces procédés étant constitués d'une étape d'imprégnation suivie d'une étape de calandrage à chaud du matériau fibreux imprégné ou d'une étape de séchage éventuellement suivie d'une étape de fusion du polymère thermoplastique.

Ainsi les technologies d'imprégnation en voie humide ou au moyen d'un précurseur liquide ou de très faible viscosité, polymérisant in situ, sont souvent utilisées pour imprégner les fibres de renfort par des polymères thermodurcissables, comme les résines époxy par exemple, tel que décrit dans le brevet WO2012/066241A2. Ces technologies ne sont généralement pas applicables directement à l'imprégnation par des polymères thermoplastiques, car ceux-ci disposent rarement de précurseurs liquides,

Les procédés d'imprégnation par extrusion en tête d'équerre d'un polymère fondu sont adaptés à l'utilisation des polymères thermoplastiques de faible viscosité uniquement. Les polymères thermoplastiques, en particulier ceux à haute température de transition vitreuse ont une viscosité à l'état fondu trop importante pour permettre une imprégnation satisfaisante des fibres et des produits semi-finis ou finis de bonne qualité.

La demande US 2014/0005331A1 décrit un procédé de préparation de fibres imprégnées avec une résine polymère, la bande obtenue étant asymétrique, c'est-à-dire qu'elle possède une face riche en polymère et une face opposée riche en fibres.

Le procédé s'effectue par voie fondue avec un dispositif ne permettant l'imprégnation majoritaire que sur l'une des faces.

Un autre procédé connu d'imprégnation est le passage en continu des fibres dans une dispersion aqueuse de poudre polymère ou dispersion aqueuse de particules de polymère ou émulsion ou suspension aqueuse de polymère. On peut par exemple se référer au document EP0324680. On utilise dans ce procédé une dispersion de poudres de taille micrométrique (en-

viron 20 μm). Après trempage dans la solution aqueuse, les fibres sont imprégnées par la poudre polymère. Le procédé implique alors une étape de séchage consistant à faire passer les fibres imprégnées dans un premier four afin d'évaporer l'eau absorbée pendant le trempage. Une étape de traitement thermique, consistant à faire passer les fibres imprégnées et séchées dans une seconde zone de chauffage, à haute température, est ensuite nécessaire pour fondre le polymère afin qu'il adhère, se répartisse et recouvre les fibres.

Le principal inconvénient de cette méthode est l'homogénéité du dépôt qui est parfois imparfaite, une enduction effectuée uniquement en surface. En outre la granulométrie des poudres utilisées usuellement est fine (typiquement 20 μm de D50 en volume) et cela augmente également le coût final du ruban ou de la nappe imprégnées.

Par ailleurs, l'étape de séchage de cette méthode induit une porosité dans les fibres imprégnées par évaporation de l'eau. De plus, le matériau obtenu est un matériau fibreux recouvert de polymère et donc un matériau multicouche.

Le document EP 0 406 067, déposé aux noms conjoints d'Atochem et de l'Etat Français, ainsi que le document EP0 201 367 décrivent quant à eux une technique d'imprégnation sur lit fluidisé de poudre de polymère. Les fibres pénètrent dans une cuve de fluidisation fermée où, en ce qui concerne EP 0 406 067, elles sont éventuellement séparées les unes des autres au moyen de galets ou de cylindres cannelés, les fibres se chargeant électrostatiquement, par frottement au contact de ces galets ou cylindres. Cette charge électrostatique permet à la poudre de polymère de se coller en surface des fibres et ainsi de les imprégner.

Comme ci-dessus, le matériau obtenu est donc un matériau fibreux recouvert de polymère et donc un matériau multicouche.

La demande internationale WO 2016/062896 décrit un poudrage de mèche par un procédé électrostatique en charge volontaire, par mise à la masse de la mèche et application d'une différence de potentiel entre la pointe d'un pistolet ou buses de poudrage et la mèche.

Le document WO2008/135663 décrit, dans une troisième variante, la réalisation d'un ruban de fibres imprégné. Dans ce document, le ruban de fibres est déjà préformé préalablement à l'étape d'imprégnation, sous forme d'un ruban formé de fibres maintenues ensemble par des moyens de contention. Le ruban ainsi préformé est préalablement chargé en électricité statique et plongé dans une enceinte contenant un lit fluidisé de fines particules de polymère en suspension dans l'air comprimé, de manière à revêtir le ruban d'une couche de revêtement polymère. Un tel document ne permet pas de réaliser une imprégnation d'une ou plusieurs mèches de fibres en simultané ni une mise en forme, en continu, des mèches imprégnées sous forme de rubans.

La demande internationale WO 2015/121583 décrit un procédé de fabrication d'un matériau fibreux imprégné par imprégnation dudit matériau en lit fluidisé puis calandrage à chaud de ladite mèche permettant la mise en forme de ladite mèche ou desdites mèches parallèles dudit matériau.

Le calandrage à chaud est effectué en aval du dispositif d'imprégnation et permet d'homogénéiser la répartition du polymère et l'imprégnation des fibres mais ne permet pas d'obtenir un ruban imprégné de manière homogène. La porosité obtenue est non quantifiée. Le document EP0335186 décrit la possibilité d'utiliser une calandre ou une presse pour compacter un composite comprenant des fibres métalliques imprégnées, utilisé pour la fabrication de corps moulé pour le blindage contre le rayonnement électromagnétique. Il ne décrit pas le fait d'imprégner une ou plusieurs mèches de fibres et de les mettre en forme, en continu, sous forme d'un ou plusieurs rubans parallèles unidirectionnels par chauffage après imprégnation au moyen d'une pièce d'embarrage conductrice de la chaleur et d'au moins un système de chauffage.

La qualité des rubans de matériau fibreux imprégné, et donc la qualité du matériau composite final, dépend non seulement de l'homogénéité de l'imprégnation des fibres et donc du contrôle et de la reproductibilité de la porosité du matériau fibreux imprégné et de son aspect monocouche, mais également de la dimension et plus particulièrement de la largeur et de l'épaisseur des rubans finaux. Une régularité et un contrôle de ces paramètres dimensionnels permettent en effet d'améliorer la tenue mécanique des matériaux composites obtenus (à partir des rubans).

Les techniques actuelles d'imprégnation de matériaux fibreux et de mise en forme de tels matériaux fibreux imprégnés sous forme de rubans calibrés présentent donc plusieurs inconvénients. Il est par exemple difficile de chauffer de manière homogène un mélange fondu de polymères thermoplastiques dans une filière et en sortie de filière, jusqu'au cœur du matériau, ce qui altère la qualité de l'imprégnation. De plus, la différence de température existante entre les fibres et un mélange fondu de polymères au niveau de la filière d'imprégnation altère également la qualité et l'homogénéité de l'imprégnation. En outre, ce mode d'imprégnation par voie fondue ne permet pas l'obtention de fort taux de fibres ou de grandes vitesses de production à cause de la grande viscosité des résines thermoplastiques, notamment lorsqu'elles présentent des températures de transition vitreuse élevées, ce qui est nécessaire à l'obtention de matériaux composites de haute performance.

La refente de nappes pour l'obtention de rubans calibrés et le raboutage de ces rubans induit un coût supplémentaire de fabrication. La refente génère en outre des problèmes importants de poussières qui polluent les rubans de matériaux fibreux imprégnés utilisés pour la dépose robot et peuvent entraîner des dysfonctionnements des robots et/ou des imperfections sur les composites. Ceci entraîne potentiellement des coûts de réparation des robots, un arrêt de la production et la mise au rebut des produits non conformes. Enfin, lors de l'étape de refente, une quantité non négligeable de fibres est détériorée, induisant une perte de propriétés, et notamment une réduction de la résistance mécanique et de la conductivité, des rubans de matériau fibreux imprégné.

Outre le surcout et la détérioration des rubans induits par le refendage, un autre inconvénient de la refente de nappes de largeur supérieure à 400mm notamment est la longueur maximale des rubans obtenus. En effet, la longueur de ces nappes larges ne dépasse que rarement les 1000-1200m linéaires, notamment à cause du poids final des nappes obtenues qui doit être compatible avec le procédé de refendage. Or, pour la réalisation de nombreuses pièces composites par dépose de rubans calibrés, notamment pour les pièces de grande dimension, une bobine de 1000m est trop courte pour ne pas avoir à réalimenter le robot en cours de fabrication de la pièce, induisant là encore un surcout. Pour augmenter la dimension des rubans refendus, il est possible de rabouter plusieurs bobines ; ce procédé consiste en la superposition et la soudure à chaud de deux rubans, induisant une surépaisseur dans le ruban final, et donc des défauts à venir lors de la dépose avec une surépaisseur placée de manière aléatoire dans la pièce finale.

Par ailleurs, les différents procédés décrits ci-dessus ne permettent pas l'obtention d'une imprégnation homogène de la mèche et donc d'un matériau fibreux monocouche ce qui est défavorable pour les applications énumérées ci-dessus.

L'invention a donc pour but de remédier à au moins un des inconvénients de l'art antérieur et notamment à l'obtention de matériau fibreux en particulier monocouche. L'invention vise notamment à proposer un matériau fibreux imprégné, en particulier monocouche, et en particulier dont le nombre de fibres pour des fibres de carbone est supérieur ou égal à 30K, notamment supérieur ou égal à 50K, ou le grammage pour la fibre de verre est supérieur ou égal à 1200 Tex, notamment supérieur ou égal à 2400 Tex, supérieur ou égal à 4800 Tex, et dont le taux de fibres en volume est notamment constant dans au moins 70% du volume de la bande ou ruban, l'imprégnation des fibres étant homogène, ledit matériau ayant des dimensions contrôlées, avec une porosité réduite, contrôlée et reproductible ainsi qu'une répartition homogène des fibres dudit matériau fibreux dont dépendent les performances de la pièce composite finale.

[Brève description de l'invention]

A cet effet, l'invention a pour objet un matériau fibreux imprégné comprenant un matériau fibreux en fibres continues et au moins une matrice polymère thermoplastique, caractérisé en ce que ledit au moins polymère thermoplastique est un polymère amorphe non réactif dont la température de transition vitreuse est telle que Tg ≥ 80°C, notamment Tg ≥ 100°C, en particulier ≥ 120°C, notamment ≥ 140°C, ou un polymère semi-cristallin non réactif dont la température de fusion Tf ≥ 150°C, le taux de fibres en volume est constant dans au moins 70% du volume de la bande ou ruban, notamment dans au moins 80% du volume de la bande ou ruban, en particulier dans au moins 90% du volume de la bande ou ruban, plus particulièrement dans au moins 95% du volume de la bande ou ruban, le taux de fibres dans ledit matériau fibreux imprégné étant compris de 45 à 65 % en volume, de préférence de 50 à 60% en volume, notamment de 54 à 60% sur les deux faces dudit matériau fibreux, le taux de porosité dans ledit matériau fibreux imprégné étant inférieur à 10%, notamment inférieur à 5%, en particulier inférieur à 2%.

Avantageusement, ledit matériau fibreux imprégné est non flexible.

L'imprégnation étant effectuée à cœur dans le procédé de l'invention, cela rend le matériau fibreux imprégné non flexible par opposition aux matériaux fibreux imprégné de l'art dans lesquels l'imprégnation est partielle, ce qui conduit à l'obtention d'un matériau fibreux flexible. Avantageusement, ledit matériau fibreux imprégné est dépourvu de polymères à cristaux liquides (LCP).

Les LCP sont tels que décrits dans la demande internationale WO 2017/017388.

Les LCP sont notamment choisis parmi les polyesters aromatiques obtenus par polycondensation d'acide 4-hydroxy benzoïque ou d'acide hydroxy naphténique (6-hydroxy naphtalène-2 acide carboxylique), les copolyesters à base de deux hydroxy acides précédents ou parmi les copolyesters-amides aromatiques de structure analogue. Comme exemple connu de copolyester aromatique LCP, on peut citer le Vectran®. De préférence, lesdits copolyesters aromatiques à base d'acide hydroxy benzoïque et d'hydroxy naphténique ont un taux en hydroxy benzoïque (hydroxy benzoate) autour de 70 à 75 % en poids et de 25-30 % en poids d'acide hydroxy naphténique (hydroxy naphténate). Avantageusement, le nombre de fibres dans ledit matériau fibreux est pour des fibres de carbone supérieur ou égal à 30K, préférentiellement supérieur ou égal à 50K. Avantageusement, le grammage pour la fibre de verre est supérieur ou égal à 1200 Tex, notamment supérieur ou égal à 2400 Tex, supérieur ou égal à 4800 Tex.

Le Tex signifie que 1000 m de fil de base pèsent 1 gr.

Avantageusement, la répartition des fibres est homogène dans au moins 95% du volume de la bande ou ruban.

La mesure du taux de fibres en volume est effectuée localement sur un volume élémentaire représentatif (VER).

Le terme « constant » signifie que le taux de fibres en volume est constant à l'incertitude de mesure près qui est de plus ou moins 1%.

Le terme « homogène » signifie que l'imprégnation est uniforme et qu'il n'y a pas de fibres sèches, c'est-à-dire, non imprégnée, dans au moins 95% du volume de la bande ou ruban de matériau fibreux imprégné.

Avantageusement, ledit matériau fibreux imprégné est monocouche.

Le terme « monocouche » signifie que lorsque l'imprégnation du matériau fibreux est effectué, l'imprégnation s'étant effectuée de manière particulièrement homogène et à cœur, et notamment avec au moins un épanouissement lors de l'imprégnation, ledit matériau fibreux et le polymère sont indissociables l'un de l'autre et forment un matériau constitué d'une seule couche à base de fibres et polymère.

## Matrice polymère

On entend par thermoplastique, ou polymère thermoplastique, un matériau généralement solide à température ambiante, pouvant être semi-cristallin ou amorphe, et qui se ramollit lors d'une augmentation de température, en particulier après passage de sa température de transition vitreuse (Tg) et s'écoule à plus haute température lorsqu'il est amorphe, ou pouvant présenter une fusion franche au passage de sa température dite de fusion (Tf) lorsqu'il est semi-cristallin, et qui redevient solide lors d'une diminution de température en dessous de sa température de cristallisation (pour un semi-cristallin) et en dessous de sa température de transition vitreuse (pour un amorphe).

La Tg et la Tf sont déterminées par analyse calorimétrique différentielle (DSC) selon la norme 11357-2 :2013 et 11357-3 :2013 respectivement.

La matrice polymère est un polymère amorphe non réactif présentant une température de transition vitreuse Tg supérieure ou égale à 80°C, notamment supérieure ou égale à 100°C, en particulier supérieure ou égale à 120°C, notamment supérieure ou égale à 140°C, ou est un polymère semi-cristallin non réactif dont la température de fusion Tf est supérieure 150°C. L'expression « polymère non réactif » signifie que le poids moléculaire n'est plus susceptible d'évoluer significativement, c'est-à-dire que sa masse moléculaire en nombre (Mn) évolue de moins de 50% lors de sa mise en œuvre et correspond donc au polymère polyamide final de la matrice thermoplastique.

Concernant le polymère de constitution de la matrice d'imprégnation du matériau fibreux, c'est avantageusement un polymère thermoplastique ou un mélange de polymères thermoplastiques. Ce polymère ou mélange de polymères thermoplastiques peut être broyé sous forme de poudre, afin de pouvoir l'utiliser dans un dispositif tel qu'une cuve, notamment en lit fluidisé ou en dispersion aqueuse.

Le dispositif sous forme de cuve, notamment en lit fluidisé peut être ouvert ou fermé.

De manière facultative, le polymère thermoplastique ou mélange de polymères thermoplastiques comprend en outre des charges carbonées, en particulier du noir de carbone ou des nanocharges carbonées, de préférence choisies parmi des nanocharges carbonées, en particulier des graphènes et/ou des nanotubes de carbone et/ou des nanofibrilles de carbone ou leurs mélanges. Ces charges permettent de conduire l'électricité et la chaleur, et permettent par conséquent de faciliter la fusion de la matrice polymère lorsqu'elle est chauffée.

Optionnellement, ledit polymère thermoplastique comprend au moins un additif, notamment choisi parmi un catalyseur, un antioxydant, un stabilisant thermique, un stabilisant UV, un stabilisant à la lumière, un lubrifiant, une charge, un plastifiant, un agent ignifugeant, un agent nucléant, un colorant, un agent conducteur électrique, un agent conducteur thermique ou un mélange de ceux-ci.

Avantageusement, ledit additif est choisi parmi un agent ignifugeant, un agent conducteur électrique et un agent conducteur thermique.

Selon une autre variante, le polymère thermoplastique ou mélange de polymères thermoplastiques peut en outre comprendre des polymères à cristaux liquides ou du poly(butylène téréphtalate) cyclisé, ou des mélanges en contenant, comme la résine CBT100 commercialisée par la société CYCLICS CORPORATION. Ces composés permettent notamment de fluidifier la matrice polymère à l'état fondu, pour une meilleure pénétration au cœur des fibres. Selon la nature du polymère, ou mélange de polymères thermoplastiques, utilisé pour réaliser la matrice d'imprégnation, notamment sa température de fusion, on choisira l'un ou l'autre de ces composés.

Les polymères thermoplastiques entrant dans la constitution de la matrice d'imprégnation du matériau fibreux, peuvent être choisis parmi :

- les polymères et copolymères de la famille des polyamides (PA) aliphatiques, cycloaliphatiques ou des PA semi-aromatiques (encore dénommés polyphtalamides (PPA)),
- les polyurées, en particulier aromatiques,
- les polymères et copolymères de la famille des acryliques comme les polyacrylates, et plus particulièrement le polyméthacrylate de méthyle (PMMA) ou ses dérivés
- les polymères et copolymères de la famille des polyaryléther cétones (PAEK) comme le poly(éthéréthercétone) (PEEK), ou les poly(aryléthercétonescétones) (PAEKK) comme le poly(éthercétonecétone) (PEKK) ou leurs dérivés,
- les polyéther-imides (PEI) aromatiques,
- les polyarylsulfures, en particulier les polyphénylène sulfures (PPS),
- les polyarylsulfones, en particulier les polyphénylène sulfones (PPSU),
- les polyoléfines, en particulier le polypropylène (PP);
- l'acide polylactique (PLA),
- l'alcool polyvinylique (PVA),
- les polymères fluorés, en particulier le poly(fluorure de vinylidène) (PVDF), ou le polytétrafluoroéthylène (PTFE) ou le polychlorotrifluoroéthylène (PCTFE),

et leurs mélanges.

Avantageusement, lorsque ledit polymère est un mélange de deux polymères P1 et P2, la proportion en poids de polymère P1 et P2 est comprise de 1-99% à 99-1%.

Avantageusement, lorsque ledit polymère thermoplastique est un mélange, et que le procédé de pré-imprégnation utilise une poudre sèche, ce mélange se présente sous forme d'une poudre obtenue soit par « dry blend » avant introduction dans la cuve de pré-imprégnation ou par « dry blend » réalisé directement dans la cuve ou encore, par broyage d'un compound réalisé au préalable en extrudeuse.

Avantageusement, ce mélange est composé d'une poudre obtenue par « dry blend »,avant l'introduction dans la cuve ou directement dans la cuve, et ce mélange de deux polymères P1 et P2 est un mélange de PEKK et de PEI.

Avantageusement, le mélange PEKK/PEI est compris de 90-10% à 60-40% en poids, en particulier de 90-10% à 70-30% en poids.

La masse moléculaire moyenne en nombre Mn dudit polymère final de la matrice thermoplastique est de préférence dans une plage allant de 10000 à 40000, de préférence de 12000 à 30000. Ces valeurs Mn peuvent correspondre à des viscosités inhérentes supérieures ou égales à 0,8 telle que déterminées dans le m-crésol selon la norme ISO 307:2007 mais en changeant le solvant (utilisation du m-crésol à la place de l'acide sulfurique et la température étant de 20°C).

Les Mn sont déterminées en particulier par le calcul à partir du taux des fonctions terminales déterminé par titration potentiométrique en solution.

Les masses Mn peuvent également être déterminées par chromatographie d'exclusion stérique ou par RMN.

La nomenclature utilisée pour définir les polyamides est décrite dans la norme ISO 1874-1:2011 "Plastiques - Matériaux polyamides (PA) pour moulage et extrusion - Partie 1 : Désignation", notamment en page 3 (tableaux 1 et 2) et est bien connue de l'homme du métier.

Le polyamide peut être un homopolyamide ou un copolyamide ou un mélange de ceux-ci.

Avantageusement, les polymères de constitution de la matrice sont choisis parmi les Polyamides (PA), en particulier choisis parmi les polyamides aliphatiques, les polyamides cycloaliphatiques, et les polyamides semi-aromatiques (polyphthalamides) éventuellement modifiés par des motifs urées, et leur copolymères, le Polyméthacrylate de méthyle (PPMA) et ses copolymères, les Polyether imides (PEI), le Poly(sulfure de phénylène) (PPS), le Poly(sulfone de phénylène) (PPSU), le Polyethercétonecétone (PEKK), le Polyetherethercétone (PEEK), les polymères fluorés comme le poly(fluorure de vinylidène) (PVDF).

Pour les polymères fluorés, on peut utiliser un homopolymère du fluorure de vinylidène (VDF de formule $CH_2=CF_2$) ou un copolymère du VDF comprenant en poids au moins 50% en masse de VDF et au moins un autre monomère copolymérisable avec le VDF. La teneur en VDF doit être supérieure à 80% en masse, voire mieux 90% en masse, pour assurer une bonne résistance mécanique et chimique à la pièce de structure, surtout lorsqu'elle est soumise à des contraintes thermiques et chimiques. Le comonomère peut être un monomère fluoré tel que par exemple le fluorure de vinyle.

Pour des pièces de structure devant résister à des températures élevées, outre les polymères fluorés, on utilise avantageusement selon l'invention les PAEK Poly(ArylEthercétone) tels que les poly(éthercétones) PEK, le poly(étheréthercétone) PEEK, le poly(éthercétone cétone) PEKK, le Poly(éthercétoneéthercétonecétone) PEKEKK ou les PA de haute température de transition vitreuse Tg).

Avantageusement, ledit polymère thermoplastique est un polymère polyamide amorphe non réactif dont la température de transition vitreuse est telle que Tg ≥ 80°C, notamment Tg ≥ 100°C, en particulier ≥ 120°C, notamment ≥ 140°C, ou un polymère semi-cristallin non réactif dont la température de fusion Tf ≥ 150°C.

Avantageusement, le polymère semi-cristallin non réactif àà une température de fusion Tf ≥ 150°C et température de transition vitreuse Tg ≥ 80°C, notamment Tg ≥ 100°C, en particulier ≥ 120°C, notamment ≥ 140°C.

Avantageusement, ledit polyamide est choisi parmi les polyamides aliphatiques, les polyamides cycloaliphatiques et les polyamides semi-aromatiques (polyphthalamides). Avantageusement, ledit prépolymère polyamide aliphatique est choisi parmi :

- le polyamide 6 (PA-6), le polyamide 11 (PA-11), le polyamide 12 (PA-12), le polyamide 66 (PA-66), le polyamide 46 (PA-46), le polyamide 610 (PA-610), le polyamide 612 (PA-612), le polyamide 1010 (PA-1010), le polyamide 1012 (PA-1012), le polyamide 11/1010 et le polyamide 12/1010, ou un mélange de ceux-ci ou un copolyamide de ceux-ci, et les copolymères blocs, notamment polyamide/polyéther (PEBA) et ledit polyamide semi-aromatique est un polyamide semi-aromatique, éventuellement modifié par des unités urées, notamment un PA MXD6 et un PA MXD10 ou un polyamide semi-aromatique de formule X/YAr, tel que décrits dans EP1505099, notamment un polyamide semi-aromatique de formule A/XT dans laquelle A est choisi parmi un motif obtenu à partir d'un aminoacide, un motif obtenu à partir d'un lactame et un motif répondant à la formule (diamine en Ca).(diacide en Cb), avec a représentant le nombre d'atomes de carbone de la diamine et b représentant le nombre d'atome de carbone du diacide, a et b étant chacun compris entre 4 et 36, avantageusement entre 9 et 18, le motif (diamine en Ca) étant choisi parmi les diamines aliphatiques, linéaires ou ramifiés, les diamines cycloaliphatiques et les diamines alkylaromatiques et le motif (diacide en Cb) étant choisi parmi les diacides aliphatiques, linéaires ou ramifiés, les diacides cycloaliphatiques et les diacides aromatiques.;

X.T désigne un motif obtenu à partir de la polycondensation d'une diamine en Cx et de l'acide téréphtalique, avec x représentant le nombre d'atomes de carbone de la diamine en Cx, x étant compris entre 6 et 36, avantageusement entre 9 et 18, notamment un polyamide de formule A/6T, A/9T, A/10T ou A/11T, A étant tel que défini ci-dessus, en particulier un polyamide PA 6/6T, un PA 66/6T, un PA 6I/6T, un PA MPMDT/6T, un PA PA11/10T, un PA 11/6T/10T, un PA MXDT/10T, un PA MPMDT/10T, un PA BACT/10T, un PA BACT/6T, PA BACT/10T/6T.

T correspond à l'acide téréphtalique, MXD correspond à la m-xylylène diamine, MPMD correspond à la méthylpentaméthylène diamine et BAC correspond au bis(aminométhyl)cyclohexane.

**Matériau fibreux :**

Concernant les fibres de constitution dudit matériau fibreux, ce sont notamment des fibres d'origine minérale, organique ou végétale sous forme de mèches.

Avantageusement, le nombre de fibres par mèche est pour des fibres de carbone supérieur ou égal à 30K, en particulier est supérieur ou égal à 50K.

Avantageusement, le grammage pour la fibre de verre est supérieur ou égal à 1200 Tex, notamment supérieur ou égal à 2400 Tex, supérieur ou égal à 4800 Tex.

Parmi les fibres d'origine minérale, on peut citer les fibres de carbone, les fibres de verre, les fibres de basalte, les fibres de silice, ou les fibres de carbure de silicium par exemple. Parmi les fibres d'origine organique, on peut citer les fibres à base de polymère thermoplastique ou thermodurcissable, telles que des fibres de polyamides semi-aromatiques, des fibres d'aramide ou des fibres en polyoléfines par exemple. De préférence, elles sont à base de polymère thermoplastique amorphe et présentent une température de transition vitreuse Tg supérieure à la Tg du polymère ou mélange de polymère thermoplastique de constitution de la matrice d'imprégnation lorsque ce dernier est amorphe, ou supérieure à la Tf du polymère ou mélange de polymère thermoplastique de constitution de la matrice d'imprégnation lorsque ce dernier est semi-cristallin. Avantageusement, elles sont à base de polymère thermoplastique semi-cristallin et présentent une température de fusion Tf supérieure à la Tg du polymère ou mélange de polymère thermoplastique de constitution de la matrice d'imprégnation lorsque ce dernier est amorphe, ou supérieure à la Tf du polymère ou mélange de polymère thermoplastique de constitution de la matrice d'imprégnation lorsque ce dernier est semi-cristallin. Ainsi, il n'y a aucun risque de fusion pour les fibres organiques de constitution du matériau fibreux lors de l'imprégnation par la matrice thermoplastique du composite final. Parmi les fibres d'origine végétale, on peut citer les fibres naturelles à base de lin, de chanvre, de lignine, de bambou, de soie notamment d'araignée, de sisal, et d'autres fibres cellulosiques, en particulier de viscose. Ces fibres d'origine végétale peuvent être utilisées pures, traitées ou bien enduites d'une couche d'enduction, en vue de faciliter l'adhérence et l'imprégnation de la matrice de polymère thermoplastique.

Le matériau fibreux peut également être un tissu, tressé ou tissé avec des fibres.

Il peut également correspondre à des fibres avec des fils de maintien.

Ces fibres de constitution peuvent être utilisées seules ou en mélanges. Ainsi, des fibres organiques peuvent être mélangées aux fibres minérales pour être imprégnée de polymère thermoplastique et former le matériau fibreux imprégné.

Les mèches de fibres organiques peuvent avoir plusieurs grammages. Elles peuvent en outre présenter plusieurs géométries. Les fibres peuvent se présenter sous forme de fibres coupées, qui composent alors les feutres ou les mats pouvant se présenter sous la forme de bandes, nappes, ou morceaux, ou sous forme de fibres continues, qui composent les tissus 2D, les non-tissés (NCF), les tresses ou mèches de fibres unidirectionnelles (UD) ou non tissées. Les fibres de constitution du matériau fibreux peuvent en outre se présenter sous forme d'un mélange de ces fibres de renfort de différentes géométries. De préférence, les fibres sont continues.

De préférence le matériau fibreux est constitué par des fibres continues de carbone, de verre ou de carbure de silicium ou leur mélange, en particulier des fibres de carbone. Il est utilisé sous forme d'une mèche ou de plusieurs mèches.

Dans les matériaux imprégnés aussi appelés « prêts à l'emploi », le polymère ou mélange de polymères thermoplastiques d'imprégnation est réparti uniformément et de manière homogène autour des fibres. Dans ce type de matériau, le polymère thermoplastique d'imprégnation doit être réparti de manière la plus homogène possible au sein des fibres afin d'obtenir un minimum de porosités, c'est à dire un minimum de vides entre les fibres. En effet, la présence de porosités dans ce type de matériaux peut agir comme des points de concentrations de contraintes, lors d'une mise sous contrainte mécanique de traction par exemple, et qui forment alors des points d'initiation de rupture du matériau fibreux imprégné et le fragilisent mécaniquement. Une répartition homogène du polymère ou mélange de polymères améliore donc la tenue mécanique et l'homogénéité du matériau composite formé à partir de ces matériaux fibreux imprégnés.

Ainsi, dans le cas de matériaux imprégnés dits « prêts à l'emploi », le taux de fibres dans ledit matériau fibreux imprégné est compris de 45 à 65 % en volume, de préférence de 50 à 60% en volume, notamment de 54 à 60% en volume.

La mesure du taux d'imprégnation peut être réalisée par analyse d'image (utilisation de microscope ou d'appareil photo ou de caméra numérique, notamment), d'une coupe transversale du ruban, en divisant la surface du ruban imprégnée par le polymère par la surface totale du produit (surface imprégnée plus surface des porosités). Afin d'obtenir une image de bonne qualité il est préférable d'enrober le ruban découpé dans son sens transversal dans une résine de polissage standard et de polir avec un protocole standard permettant l'observation de l'échantillon au microscope grossissement fois 6 au minimum. Avantageusement, le taux de porosité dudit matériau fibreux imprégné est inférieur à 10%, notamment inférieur à 5%, en particulier inférieur à 2%.

Il faut noter qu'un taux de porosité nul est difficilement accessible et que par conséquent, avantageusement le taux de porosité est supérieur à 0% mais inférieur aux taux cités ci-dessus.

Le taux de porosité correspond au taux de porosité fermée et peut être déterminée soit par microscopie électronique, soit comme étant l'écart relatif entre la densité théorique et la densité expérimentale dudit matériau fibreux imprégné tel que décrit dans la partie exemples de la présente invention.

### Procédé de préparation du matériau fibreux

Le matériau fibreux imprégné, notamment monocouche, peut être préparé en deux étapes : Une première étape de pré-imprégnation par une matrice polymère et une seconde étape de chauffage au moyen d'au moins une pièce d'embarrage (E) et d'au moins un système de chauffage.

### Première étape :pré-imprégnation

La première étape de pré-imprégnation pour obtenir un matériau peut être effectuée selon les techniques bien connues de l'homme du métier et notamment choisies parmi celles décrites ci-dessus.

Ainsi elle peut être effectuée par une technologie de pré-imprégnation par dépôt de poudre, par voie fondue, notamment par pultrusion, par extrusion en tête d'équerre de polymère fondu, par passage en continu des fibres dans une dispersion aqueuse de poudre polymère ou dispersion aqueuse de particules de polymère ou émulsion ou suspension aqueuse de polymère, par lit fluidisé, équipé ou non d'au moins un embarrage (E'), par projection par buse ou pistolet par voie sèche dans une cuve, équipée ou non d'au moins un embarrage (E').

L'embarrage peut être un rouleau de compression concave, convexe ou cylindrique, en particulier il est cylindrique.

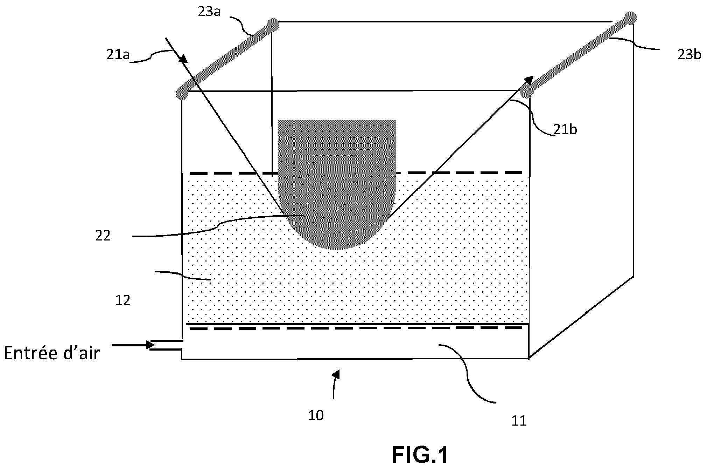

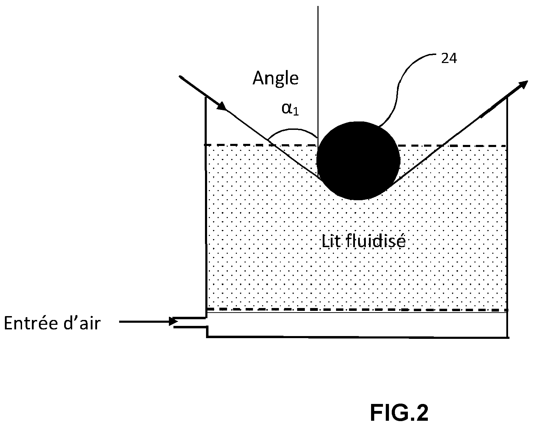

La figure 1 présente un exemple de cuve muni d'un embarrage et la figure 2 présente un exemple de cuve comprenant un lit fluidisé dans laquelle l'embarrage est un rouleau de compression cylindrique.

La même cuve peut être utilisée sans présence de lit fluidisé et équipée de pistolet de projection.

La pré-imprégnation peut aussi être effectuée avec un système tel que défini ci-dessus dans lequel un ou plusieurs embarrage(s) (E") est(sont) présent(s) en amont dudit système, notamment avant la cuve dans laquelle la pré-imprégnation est effectuée.

Il faut noter que les pièces d'embarrage (E) et (E") peuvent être identiques ou différentes que ce soit au niveau du matériau ou de la forme et ses caractéristiques (diamètre, longueur, largeur, hauteur... en fonction de la forme).

### Voie fondue :

L'étape de pré-imprégnation peut être effectuée par voie fondue, notamment par pultrusion. Les technique de pré-imprégnation par voie fondue sont bien connues de l'homme du métier et sont décrites dans les références ci-dessus.

L'étape de pré-imprégnation est effectué notamment par extrusion en tête d'équerre de la matrice polymère et passage de ladite mèche ou desdites mèches dans cette tête d'équerre puis passage dans une filière chauffée, le la tête d'équerre étant éventuellement munie d'embarrages fixes ou rotatifs sur lesquels la mèche défile provoquant ainsi un épanouissement de ladite mèche permettant une pré-imprégnation de ladite mèche.

La pré-imprégnation peut notamment être effectuée telle que décrite dans US 2014/0005331A1 à la différence que l'alimentation en résine est effectuée des deux côtés de ladite mèche et qu'il n'existe pas de surface de contact éliminant une partie de la résine sur l'une des deux surfaces.

Avantageusement, l'étape de pré-imprégnation est effectuée par voie fondue à grande vitesse, c'est-à-dire avec une vitesse de défilement de ladite mèche ou desdites mèches supérieure ou égale à 5m/min, en particulier supérieure à 9 m/min.

### Lit fluidisé :

L'étape de pré-imprégnation peut être effectuée en lit fluidisé.

Un exemple d'unité de mise en œuvre d'un procédé de fabrication sans l'étape de chauffage au moyen d'au moins une pièce d'embarrage est décrit dans la demande internationale WO 2015/121583.

Ce système décrit l'utilisation d'une cuve comprenant un lit fluidisé pour effectuer l'étape de pré-imprégnation et peut être utilisé dans le cadre de l'invention.

Avantageusement, la cuve comprenant le lit fluidisé est muni d'au moins une pièce d'embarrage (E') (figure 1) qui peut être un rouleau de compression (figure 2)).

Par pièce d'embarrage (E'), il faut entendre tout système sur lequel la mèche à la possibilité de défiler dans la cuve. La pièce d'embarrage (E') peut avoir n'importe quelle forme à partir du moment où la mèche peut défiler dessus.

Un exemple de pièce d'embarrage (E'), sans restreindre l'invention à celui-ci, est détaillé dans la figure 1.

Il faut noter que les pièces d'embarrage (E) et (E') peuvent être identiques ou différentes que ce soit au niveau du matériau ou de la forme et ses caractéristiques (diamètre, longueur, largeur, hauteur... en fonction de la forme).

Cependant, la pièce d'embarrage (E') n'est ni chauffante ni chauffée.

L'étape de pré-imprégnation du matériau fibreux est réalisée par passage d'une ou plusieurs mèches dans un dispositif de pré-imprégnation en continu, comprenant une cuve (10) muni d'au moins une pièce d'embarrage (E') et comprenant un lit fluidisé (12) de poudre de ladite matrice polymère.

La poudre de ladite matrice polymère ou polymère est mise en suspension dans un gaz G (de l'air par exemple) introduit dans la cuve et circulant dans la cuve (10) à travers une trémie (11). La ou les mèches sont mises en circulation dans ce lit fluidisé (12).

La cuve peut avoir toute forme, notamment cylindrique ou parallélépipédique, en particulier un parallélépipède rectangle ou un cube, avantageusement un parallélépipède rectangle. La cuve (10) peut être une cuve ouverte ou fermée.

Dans le cas où la cuve est fermée, elle est alors équipée d'un système d'étanchéité pour que la poudre de ladite matrice polymère ne puisse pas sortir de ladite cuve.

Cette étape de pré-imprégnation est donc effectuée par voie sèche, c'est à dire que la matrice polymère thermoplastique est sous forme de poudre, notamment en suspension dans un gaz, en particulier de l'air, mais ne peut pas être en dispersion dans un solvant ou dans l'eau. Chaque mèche à pré-imprégner est déroulée d'un dispositif à dévidoirs sous la traction engendrée par des cylindres (non représentés).

Chaque dévidoir est pourvu d'un frein (non représenté) de manière à appliquer une tension sur chaque mèche de fibres. Dans ce cas, un module d'alignement permet de disposer les mèches de fibres parallèlement les unes par rapport aux autres. De cette manière les mèches de fibres ne peuvent pas être en contact les unes avec les autres, ce qui permet d'éviter une dégradation mécanique des fibres par frottement entre elles.

La mèche de fibres ou les mèches de fibres parallèles passent alors dans une cuve (10), comprenant en particulier un lit fluidisé (12), munie d'une pièce d'embarrage (E') qui est un rouleau de compression (24) dans le cas de la figure 2. La mèche de fibres ou les mèches de fibres parallèles ressort(ent) ensuite de la cuve après pré-imprégnation après contrôle éventuel du temps de séjour dans la poudre.

L'expression « temps de séjour dans la poudre» signifie le temps durant lequel la mèche est en contact avec ladite poudre dans le lit fluidisé.

Si le matériau fibreux, tel que les mèches de fibre de verre ou de carbone, présente un ensimage, une étape optionnelle de dé-ensimage peut être effectuée avant le passage du matériau fibreux dans la cuve.

Avantageusement, la cuve utilisée comprend un lit fluidisé avec un embarrage et ladite étape de pré-imprégnation est effectuée avec un épanouissement simultané de ladite mèche ou desdites mèches entre l'entrée et la sortie de la cuve comprenant ledit lit fluidisé. L'expression « entrée de la cuve » correspond à la tangente verticale du bord de la cuve qui comprend le lit fluidisé.

L'expression « sortie de la cuve » correspond à la tangente verticale de l'autre bord de la cuve qui comprend le lit fluidisé.

L'épanouissement consiste à singulariser au maximum chaque fibre constitutive de ladite mèche des autres fibres qui l'entourent dans son plus proche espace. Il correspond à l'étalement transverse de la mèche.

En d'autres termes, l'étalement transverse ou la largeur de la mèche augmente entre l'entrée de la cuve comprenant le lit fluidisé et la sortie de la cuve comprenant le lit fluidisé et permet ainsi une pré-imprégnation améliorée du matériau fibreux.

L'utilisation d'au moins un embarrage (E'), en particulier un rouleau de compression cylindrique, dans l'étape de pré-imprégnation permet donc une pré-imprégnation améliorée par rapport aux procédés de l'art antérieur.

L'expression « rouleau de compression » signifie que la mèche qui défile s'appuie partiellement ou totalement sur la surface dudit rouleau de compression, ce qui induit l'épanouissement de la dite mèche.

Avantageusement, ledit au moins un rouleau de compression est de forme cylindrique et le pourcentage d'épanouissement de ladite mèche ou desdites mèches entre l'entrée et la sortie de la cuve dudit lit fluidisé est compris de 1% à 1000%, préférentiellement de 100% à 800% préférentiellement de 200% à 800%, préférentiellement de 400% à 800%.

Le pourcentage d'épanouissement est égal au rapport de la largeur finale de la mèche sur la largeur initiale de la mèche multiplié par 100.

Le diamètre dudit au moins un rouleau de compression est compris de 3 mm à 500 mm, préférentiellement de 10 mm à 100 mm, en particulier de 20 mm à 60 mm.

Au-dessous de 3 mm, la déformation de la fibre induite par le rouleau de compression est trop importante.

Avantageusement, le rouleau de compression est cylindrique et non cannelé et en particulier est métallique.

Lorsque la pièce d'embarrage (E') est au moins un rouleau de compression, selon une première variante, un seul rouleau de compression est présent dans le lit fluidisé et ladite pré-imprégnation est effectuée au niveau de l'angle $\alpha_1$ formé par ladite mèche ou lesdites mèches entre l'entrée dudit rouleau de compression et la tangente verticale audit rouleau de compression.

L'angle $\alpha_1$ formé par ladite mèche ou lesdites mèches entre l'entrée dudit rouleau de compression et la tangente verticale audit rouleau de compression permet la formation d'une zone dans laquelle la poudre va se concentrer conduisant ainsi à un « effet de coin » qui avec l'épanouissement simultané de la mèche par ledit rouleau de compression permet une pré-imprégnation sur une largeur plus importante de mèche et donc une pré-imprégnation améliorée comparée aux techniques de l'art antérieur améliorée.

Dans toute la description, toutes les valeurs d'angle données sont exprimées en valeurs absolue.

Avantageusement, l'angle $\alpha_1$ est compris de 0 à 89°, préférentiellement 5° à 85°, préférentiellement de 5° à 45°, préférentiellement de 5° à 30°.

Néanmoins, un angle $\alpha_1$ compris de 0 à 5° est susceptible d'engendrer des risques de sollicitation mécanique, ce qui conduira à la casse des fibres et un angle $\alpha_1$ compris de 85° à 89° ne crée pas suffisamment d'effort mécanique pour créer « l'effet de coin ».

Une valeur de l'angle $\alpha_1$ égale à 0° correspond donc à une fibre verticale. Il est bien évident que la hauteur du rouleau de compression cylindrique est réglable permettant ainsi de pouvoir positionner la fibre verticalement.

Avantageusement, le bord d'entrée de la cuve (23a) est équipé d'un rouleau, notamment cylindrique et rotatif sur lequel défile ladite mèche ou les dites mèches conduisant ainsi à un épanouissement préalable à la pré-imprégnation.

Il est bien évident que « l'effet de coin » provoqué par l'angle $\alpha_1$ favorise la pré-imprégnation sur une face mais l'épanouissement de ladite mèche obtenu grâce au rouleau de compression permet aussi d'avoir une pré-imprégnation sur l'autre face de ladite mèche. Autrement dit, ladite pré-imprégnation est favorisée sur une face de ladite mèche ou desdites mèches au niveau de l'angle $\alpha_1$ formé par ladite mèche ou lesdites mèches entre l'entrée dudit au moins un rouleau de compression $R_1$ et la tangente verticale au rouleau de compression $R_1$ mais l'épanouissement permet aussi de pré-imprégner l'autre face.

L'angle $\alpha_1$ est tel que défini ci-dessus.

Avantageusement, le diamètre en volume D90 des particules de poudre de polymère thermoplastique est compris 30 à 500 $\mu$m, avantageusement de 80 à 300 $\mu$m.

Avantageusement, le diamètre en volume D10 des particules de poudre de polymère thermoplastique est compris de 5 à 200 $\mu$m, avantageusement de 15 à 100 $\mu$m.

Avantageusement, le diamètre en volume des particules de poudre de polymère thermoplastique est compris dans le ratio D90/D10, soit compris de 1,5 à 50, avantageusement de 2 à 10.

Avantageusement, le diamètre moyen D50 en volume des particules de poudre de polymère thermoplastique est compris de 10 à 300 $\mu$m, notamment de 30 à 200 $\mu$m, plus particulièrement de 45 à 200 $\mu$m.

Les diamètres en volume des particules (D10, D50 et D90) sont définis selon la norme ISO 9276 :2014.

Le « D50 » correspond au diamètre moyen en volume, c'est à dire la valeur de la taille de particule qui divise la population de particules examinée exactement en deux.

Le « D90 » correspond à la valeur à 90% de la courbe cumulée de la distribution granulométrique en volume.

Le « D10 » correspond à la correspond à la taille de 10% du volume des particules.

Selon d'autres variantes, deux, trois rouleaux ou plus peuvent être présents dans le lit fluidisé.

## Pulvérisation par pistolet :

L'étape de pré-imprégnation du matériau fibreux peut également être effectuée par passage d'une ou plusieurs mèches dans un dispositif de pré-imprégnation en continu par projection, comprenant une cuve, comprenant une ou des buses(s) ou un ou des pistolet(s) projetant la poudre de polymère sur le matériau fibreux en entrée de rouleau.

La poudre de polymère(s) ou polymère est projetée dans la cuve au moyen de buse(s) ou de pistolet(s) au niveau de la pièce d'embarrage notamment du rouleau de compression (en entrée) sur ledit matériau fibreux. La ou les mèches sont mises en circulation dans cette cuve.

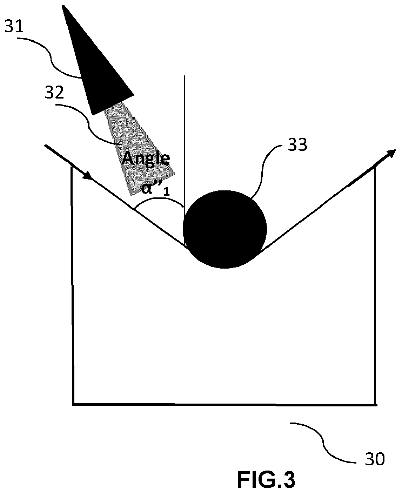

Un exemple sans être limité à celui-ci avec un pistolet est présenté figure 3.

Toutes les caractéristiques des embarrages, et notamment des rouleaux de compression, de l'épanouissement, et de l'angle $\alpha_1$ provoquant l'effet de coin et détaillées pour le lit fluidisé sont également valables pour la pulvérisation par pistolet.

Selon d'autres variantes, deux, trois rouleaux ou plus peuvent être présents munis chacun d'un pistolet.

## Deuxième étape : chauffage

L'étape de pré-imprégnation peut donc être effectuée par tout moyen muni ou non d'au moins un embarrage (E').

La présence de l'embarrage permet l'épanouissement de la mèche et favorise la pré-imprégnation. Cependant, la présence de cet embarrage n'est pas indispensable à partir du moment où un système de chauffage muni d'au moins une pièce d'embarrage (E) est présent après l'étape de pré-imprégnation

L'expression «pièce d'embarrage (E)» signifie tout système sur lequel la mèche a la possibilité de défiler. La pièce d'embarrage (E) peut avoir n'importe quelle forme à partir du moment où la mèche peut défiler dessus. Elle peut être fixe ou en rotation.

Le système de chauffage est tout système dégageant de la chaleur ou émettant un rayonnement susceptible de chauffer la pièce d'embarrage (E).

Il peut être un chauffage infra-rouge, une lampe UV, un chauffage par convection.

La pièce d'embarrage (E) est par conséquent conductrice ou absorbe le rayonnement émis par la chaleur.

L'expression « pièce d'embarrage (E) conductrice de la chaleur » signifie que la pièce d'embarrage (E) est constituée d'un matériau capable d'absorber et de conduire la chaleur. Il peut être également un système de chauffage par micro-onde ou laser.

Dans ce cas, la pièce d'embarrage est non conductrice de la chaleur ou n'absorbe pas le rayonnement émis par la chaleur.

L'expression « pièce d'embarrage (E) non conductrice de la chaleur » signifie que la pièce d'embarrage (E) est constituée d'un matériau incapable d'absorber et de conduire la chaleur. Ladite au moins une pièce d'embarrage (E) est situé ou comprise dans l'environnement du système de chauffage, c'est-à-dire qu'elle n'est pas à l'extérieur du système de chauffage. Avantageusement ledit système de chauffage surmonte ladite au moins une pièce d'embarrage (E). Le système de chauffage est à une hauteur suffisante pour que le polymère présent sur la mèche puisse fondre mais sans dégrader ledit polymère.

Néanmoins, ledit système de chauffage comprend soit uniquement ladite au moins une pièce d'embarrage (E) mais peut comprendre également une portion de la mèche, hors dudit système d'embarrage (E), ladite portion de mèche étant située avant et/ou après ledit système d'embarrage (E).

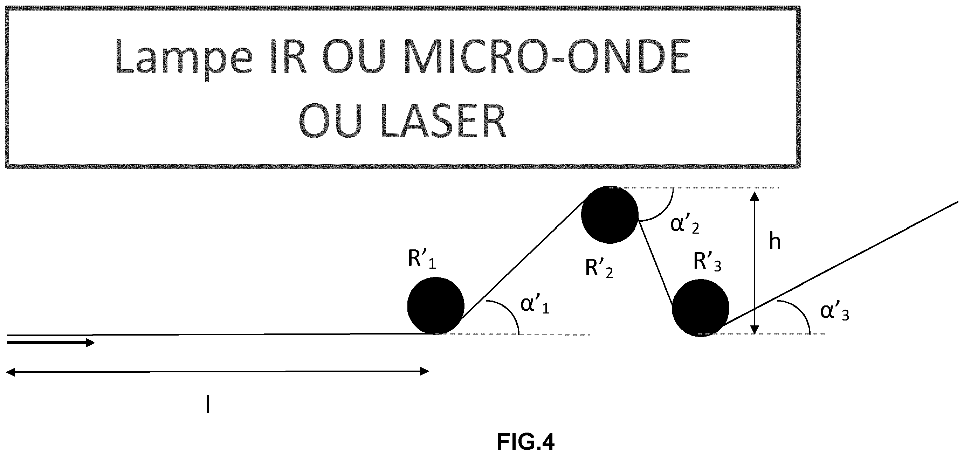

Une représentation d'un système de chauffage et de trois embarrages (E), correspondant à R'$_1$, R'$_2$ et R'$_3$, est présentée figure 4, sans être limitée en quoi que ce soit à celle-ci.

Il est bien évident qu'un second système de chauffage peut être présent sous les embarrages permettant ainsi une fusion uniforme dudit polymère sur les deux surfaces de la mèche.

Le système de chauffage représenté figure 4 est un système horizontal. Cependant, le ou les système(s) de chauffage peuvent être disposés verticalement avec défilement également vertical de la mèche au travers des embarrages.

Par conséquent, cette étape de chauffage permet de parfaire l'imprégnation de la mèche effectuée au préalable lors de l'étape de pré-imprégnation et notamment d'obtenir une imprégnation homogène et à cœur.

En effet, quel que soit le système utilisé pour l'étape de pré-imprégnation, un premier épanouissement se produit lors de cette étape, notamment si l'étape de pré-imprégnation est effectuée avec utilisation de pièces d'embarrage (E'), telle que dans un lit fluidisé avec au moins un embarrage comme décrit ci-dessus.

Un premier épanouissement de la mèche se produit au niveau desdits rouleaux de compression correspondants aux pièces d'embarrage (E') avec « effet de coin » en raison du défilement partiel ou total de ladite mèche sur la ou lesdites pièce(s) d'embarrage (E') et un deuxième épanouissement se produit lors de l'étape de chauffage, au niveau desdits rouleaux de compression correspondants aux pièces d'embarrage (E) en raison du défilement partiel ou total de ladite mèche sur la ou lesdites pièce(s) d'embarrage (E).

Ce deuxième épanouissement est précédé lors du passage de la mèche dans le système de chauffage, avant son défilement partiel ou total sur la ou lesdites pièce(s) d'embarrage (E), d'une rétractation de la mèche en raison de la fusion du polymère sur ladite mèche.

Ce deuxième épanouissement combiné à la fusion de ladite matrice polymère par le système de chauffage et à la rétractation de la mèche permettent d'homogénéiser la pré-imprégnation et finaliser ainsi l'imprégnation et d'avoir ainsi une imprégnation à cœur et d'avoir un taux élevé de fibres en volume, notamment constant dans au moins 70% du volume de la bande ou ruban, notamment dans au moins 80% du volume de la bande ou ruban, en particulier dans au moins 90% du volume de la bande ou ruban, plus particulièrement dans au moins 95% du volume de la bande ou ruban, ainsi que de diminuer la porosité. Avantageusement, le pourcentage d'épanouissement lors de l'étape de chauffage entre l'entrée du premier rouleau de compression R'$_1$ et la sortie du dernier rouleau de compression R'$_i$ est d'environ 0 à 300%, en particulier de 0 à 50%.

Les différents épanouissements lors de l'étape de chauffage combinés à la fusion du polymère thermoplastique et la rétractation de la mèche pendant ladite étape de chauffage permettent l'obtention d'un taux de fibres imprégné après l'étape de chauffage compris de 45% à 64% en volume, de préférence de 50 à 60% en volume, en particulier de 54 à 60% en volume (taux de fibres qui ne peut être atteint par les techniques classiques de voie fondue), le taux de fibres en volume et la répartition des fibres étant substantiellement identique en moyenne de part et d'autre du plan médian du matériau fibreux sur toute la longueur dudit matériau fibreux conduisant ainsi à l'obtention d'un matériau fibreux notamment monocouche.

En dessous de 45% de fibres, le renfort n'a pas d'intérêt pour ce qui concerne les propriétés mécaniques.

Au-dessus de 65%, les limites du procédé sont atteintes et les propriétés mécaniques sont reperdues.

Avantageusement, le taux de porosité dans ledit matériau fibreux imprégné est inférieur à 10%, notamment inférieur à 5%, en particulier inférieur à 2%.

Cela permet donc de travailler avec des grandes vitesses de défilement et de diminuer ainsi les coûts de production.

**Etape de mise en forme**

Optionnellement, une étape de mise en forme de la mèche ou desdites mèches parallèles dudit matériau fibreux imprégné est effectuée.

Un système de calandrage tel que décrit dans WO 2015/121583 peut être utilisé.

Selon un autre aspect, la présente invention concerne l'utilisation d'un matériau fibreux imprégné, tel que défini ci-dessus, pour la préparation de rubans calibrés adaptés à la fabrication de pièces composites en trois dimensions, par dépose automatique desdits rubans au moyen d'un robot.

Selon encore un autre aspect, la présente invention concerne un ruban comprenant au moins un matériau fibreux tel que défini ci-dessus.

Avantageusement, ledit ruban est un ruban unique unidirectionnel ou en une pluralité de rubans parallèles unidirectionnels.

Avantageusement ledit ruban a une largeur (l) et une épaisseur (ep) adaptées à une dépose par robot dans la fabrication de pièces en trois dimensions, sans besoin de refente, et de préférence a une largeur (l) d'au moins 5 mm et pouvant aller jusqu'à 400mm, de préférence comprise entre 5 et 50 mm et de manière encore plus préférée comprise entre 5 et 15mm.

Avantageusement, le polymère thermoplastique dudit ruban est un polyamide tel que défini ci-dessus

Avantageusement, il est choisi parmi notamment un polyamide aliphatique tel que PA 6, PA 11, PA 12, PA 66, PA 46, PA 610, PA 612, PA 1010, PA 1012, PA 11/1010 ou PA 12/1010 ou un polyamide semi-aromatique tel que un PA MXD6 et un PA MXD10 ou choisi parmi PA 6/6T, PA 6I/6T, PA 66/6T, PA 11/10T, PA 11/6T/10T, PA MXDT/10T, PA MPMDT/10T, PA BACT/6T, PA BACT/10T et PA BACT/10T/6T, un PVDF, un PEEK, PEKK et un PEI ou un mélange de ceux-ci.

Avantageusement, il est choisi parmi notamment un polyamide aliphatique tel que PA 6, PA 11, PA 12, PA 11/1010 ou PA 12/1010 ou un polyamide semi-aromatique tel que PA MXD6 et PA MXD10 ou choisi parmi PA 6/6T, PA 6I/6T, PA 66/6T, PA 11/10T, PA 11/6T/10T, PA MXDT/10T, PA MPMDT/10T et PA BACT/10T, PA BACT/6T, PA BACT/10T/6T.

Selon un autre aspect, la présente invention concerne l'utilisation d'un ruban tel que défini ci-dessus, dans la fabrication de pièces composites en trois dimensions.

Avantageusement, ladite fabrication desdites pièces composites concerne les domaines des transports, en particulier automobile, du pétrole et du gaz, en particulier l'offshore, du stockage de gaz, aéronautique, nautique, ferroviaire ; des énergies renouvelables, en particulier éolienne, hydrolienne, les dispositifs de stockage d'énergie, les panneaux solaires ; des panneaux de protection thermique ; des sports et loisirs, de la santé et du médical et de l'électronique.

Selon un autre aspect, la présente invention concerne une pièce composite en trois dimensions caractérisée en ce qu'elle résulte de l'utilisation d'au moins un ruban unidirectionnel de matériau fibreux imprégné tel que défini ci-dessus.

**Modes de réalisation avantageux du procédé de l'invention**

Avantageusement, le matériau fibreux est choisi parmi les mèches de fibre de carbone en particulier supérieures ou égales à 30K, notamment supérieures ou égales à 50K et des fibres de verre en particulier dont le grammage est supérieur ou égal à 1200 Tex, notamment supérieur ou égal à 2400 Tex, supérieur ou égal à 4800 Tex.

Avantageusement, le prépolymère thermoplastique utilisé pour imprégner la fibre de carbone est choisi parmi un polyamide, notamment un polyamide aliphatique tel que PA 11, PA 12, un PA 11/1010 et un PA 12/1010, un polyamide semi-aromatique, en particulier un PA 11/10T, un PA 11/6T/10T, un PA MXDT/10T, un PA MPMDT/10T, un PA BACT/10T, un PA BACT/6T, un PA BACT/10T/6T, un PA MXD6 et un PA MXD10, un PEKK et un PEI ou un mélange de ceux-ci.

Avantageusement, le prépolymère thermoplastique utilisé pour imprégner la fibre de verre est choisi parmi un polyamide, notamment un polyamide aliphatique tel que PA 11, PA 12, un PA 11/1010 et un PA 12/1010, un polyamide semi-aromatique, en particulier un PA 11/10T, un PA 11/6T/10T, un PA MXDT/10T, un PA MPMDT/10T, un PA BACT/10T, un PA BACT/6T, un PA BACT/10T/6T un PEKK et un PEI ou un mélange de ceux-ci. Avantageusement, le matériau fibreux comprend des mèches de fibre de carbone supérieures ou égales à 30K, notamment supérieures ou égales à 50K et le polymère thermoplastique utilisé pour pré-imprégner la fibre de carbone est choisi parmi un polyamide, notamment un polyamide aliphatique tel que PA 11, PA 12, un PA 11/1010 et un PA 12/1010, un polyamide semi-aromatique, en particulier un PA 11/10T, un PA 11/6T/10T, un PA MXDT/10T, un PA MPMDT/10T, un PA BACT/10T, un PA BACT/6T, un PA BACT/10T/6T, un PA MXD6 et un PA MXD10, un PEKK et un PEI ou un mélange de ceux-ci. Avantageusement, le matériau fibreux est constitué de mèches de fibre de carbone supérieures ou égales à 30K, notamment supérieures ou égales à 50K et le polymère thermoplastique utilisé pour pré-imprégner la fibre de carbone est choisi parmi un polyamide, notamment un polyamide aliphatique tel que PA 11, PA 12, un PA 11/1010 et un PA 12/1010, un polyamide semi-aromatique, en particulier un PA 11/10T, un PA 11/6T/10T, un PA MXDT/10T, un PA MPMDT/10T, un PA BACT/10T, un PA BACT/6T, un PA BACT/10T/6T, un PA MXD6 et un PA MXD10, un PEKK et un PEI ou un mélange de ceux-ci. Avantageusement, le matériau fibreux comprend des mèches de fibre de verre dont le grammage est supérieur ou égal à 1200 Tex, notamment supérieur ou égal à 2400 Tex, supérieur ou égal à 4800 Tex et le polymère thermoplastique utilisé pour pré-imprégner la fibre de verre est choisi parmi un polyamide, notamment un polyamide aliphatique tel que PA 11, PA 12, un PA 11/1010 et un PA 12/1010, un polyamide semi-aromatique, en particulier un PA 11/10T, un PA 11/6T/10T, un PA MXDT/10T, un PA MPMDT/10T, un PA BACT/10T, un PA BACT/6T, un PA BACT/10T/6T, un PA MXD6 et un PA MXD10, un PEKK et un PEI ou un mélange de ceux-ci.

Avantageusement, le matériau fibreux est constitué de mèches de fibre de verre dont le grammage est supérieur ou égal à 1200 Tex, notamment supérieur ou égal à 2400 Tex, supérieur ou égal à 4800 Tex et le polymère thermoplastique utilisé pour pré-imprégner la fibre de verre est choisi parmi un polyamide, notamment un polyamide aliphatique tel que PA 11, PA 12, un PA 11/1010 et un PA 12/1010, un polyamide semi-aromatique, en particulier un PA 11/10T, un PA 11/6T/10T, un PA MXDT/10T, un PA MPMDT/10T, un PA BACT/10T, un PA BACT/6T, un PA BACT/10T/6T, un PA MXD6 et un PA MXD10, un PEKK et un PEI ou un mélange de ceux-ci.

Avantageusement, le matériau fibreux comprend des mèches de fibre de carbone supérieures ou égales à 30K, notamment supérieures ou égales à 50K et le polymère thermoplastique utilisé pour pré-imprégner la fibre de carbone est choisi parmi un polyamide, notamment un polyamide aliphatique tel que PA 11, PA 12, un PA 11/1010 et un PA 12/1010, un polyamide semi-aromatique, en particulier un PA 11/10T, un PA 11/6T/10T, un PA MXDT/10T, un PA MPMDT/10T, un PA BACT/10T, un PA BACT/6T, un PA BACT/10T/6T, un PA MXD6 et un PA MXD10, un PEKK et un PEI ou un mélange de ceux-ci et la Tg dudit polymère thermoplastique est $\geq$ 80°C, notamment $\geq$ 100°C, en particulier $\geq$ 120°C, notamment $\geq$ 140°C ou la Tf est $\geq$ 150°C.

Avantageusement, le matériau fibreux est constitué de mèches de fibre de carbone supérieures ou égales à 30K, notamment supérieures ou égales à 50K et le polymère thermoplastique utilisé pour pré-imprégner la fibre de carbone est choisi parmi un polyamide, notamment un polyamide aliphatique tel que PA 11, PA 12, un PA 11/1010 et un PA 12/1010, un polyamide semi-aromatique, en particulier un PA 11/10T, un PA 11/6T/10T, un PA MXDT/10T, un PA MPMDT/10T, un PA BACT/10T, un PA BACT/6T, un PA BACT/10T/6T, un PA MXD6 et un PA MXD10, un PEKK et un PEI ou un mélange de ceux-ci et la Tg dudit polymère thermoplastique est $\geq$ 80°C, notamment $\geq$ 100°C, en particulier $\geq$ 120°C, notamment $\geq$ 140°C ou la Tf est $\geq$ 150°C.

Avantageusement, le matériau fibreux comprend de mèches de fibre de verre dont le grammage est supérieur ou égal à 1200 Tex, notamment supérieur ou égal à 2400 Tex, supérieur ou égal à 4800 Tex et le polymère thermoplastique utilisé pour pré-imprégner la fibre de verre est choisi parmi un polyamide, notamment un polyamide aliphatique tel que PA 11, PA 12, un PA 11/1010 et un PA 12/1010, un polyamide semi-aromatique, en particulier un PA 11/10T, un PA 11/6T/10T, un PA MXDT/10T, un PA MPMDT/10T, un PA BACT/10T, un PA BACT/6T, un PA BACT/10T/6T, un PA MXD6 et un PA MXD10, un PEKK et un PEI ou un mélange de ceux-ci et la Tg dudit polymère thermoplastique est $\geq$ 80°C, notamment $\geq$ 100°C, en particulier $\geq$ 120°C, notamment $\geq$ 140°C ou la Tf est $\geq$ 150°C. Avantageusement, le matériau fibreux est constitué de mèches de fibre de verre dont le grammage est supérieur ou égal à 1200 Tex, notamment supérieur ou égal à 2400 Tex, supérieur ou égal à 4800 Tex et le polymère thermoplastique utilisé pour pré-imprégner la fibre de verre est choisi parmi un polyamide, notamment un polyamide aliphatique tel que PA 11, PA 12, un PA 11/1010 et un PA 12/1010, un polyamide semi-aromatique, en particulier un PA 11/10T, un PA 11/6T/10T, un PA MXDT/10T, un PA MPMDT/10T, un PA BACT/10T, un PA BACT/6T, un PA BACT/10T/6T, un PA MXD6 et un PA MXD10, un PEKK et un PEI ou un mélange de ceux-ci et la Tg dudit polymère thermoplastique est $\geq$ 80°C, notamment $\geq$ 100°C, en particulier $\geq$ 120°C, notamment $\geq$ 140°C ou la Tf est $\geq$ 150°C.

**Description des figures**

La figure 1 détaille une cuve (10) comprenant un lit fluidisé (12) avec une pièce d'embarrage, réglable en hauteur (22). Le bord de l'entrée de la cuve est équipé d'un rouleau rotatif 23a sur lequel défile la mèche 21a et le bord de la sortie cuve est équipé d'un rouleau rotatif 23b sur lequel défile la mèche 21b.

La figure 2 présente décrit un mode de réalisation à un seul rouleau de compression, avec une cuve (10) comprenant un lit fluidisé (12) dans lequel un seul rouleau de compression cylindrique (24) est présent et montrant l'angle $\alpha_1$.

Les flèches au niveau de la fibre indiquent le sens de défilement de la fibre.

La figure 3 présente décrit un mode de réalisation à un seul rouleau de compression, avec une cuve (30) comprenant un pistolet de projection (31) de poudre (32) dans laquelle un seul rouleau de compression cylindrique (33) est présent et montrant l'angle $\alpha''_1$. Les flèches au niveau de la fibre indiquent le sens de défilement de la fibre.

La figure 4 présente un schéma d'un système de chauffage à trois rouleaux.

La figure 5 présente une photo prise au microscope électronique à balayage d'une vue en coupe d'une mèche de fibre de carbone Zoltek, 50K imprégnée par une poudre de polyamide PA MPMDT/10T de D50= 115$\mu$m selon l'exemple 1 et décrit dans WO 2015/121583 (avant calandrage).

Le procédé selon WO 2015/121583 conduit à un matériau fibreux qui manque d'homogénéité à plusieurs endroits de la mèche imprégnée ainsi qu'une porosité importante et une mauvaise répartition des fibres.

Le diamètre d'une fibre représente 7 $\mu$m.

La figure 6 présente une photo prise au microscope électronique à balayage d'une vue en coupe d'une mèche de fibre de carbone Zoltek, 50K imprégnée par une poudre de polyamide PA MPMDT/10T de D50= 115 $\mu$m selon l'invention exemple 2 (avant calandrage).
Le diamètre d'une fibre représente 7 $\mu$m.

Les exemples suivants illustrent de façon non limitative la portée de l'invention.

## Exemple 1 (exemple comparatif):

Une mèche de fibre de carbone Zoltek, 50K a été imprégnée avec du PA MPMDT/10T tel que décrit dans WO 2015/121583.
D50= 115$\mu$M.

## Résultats :

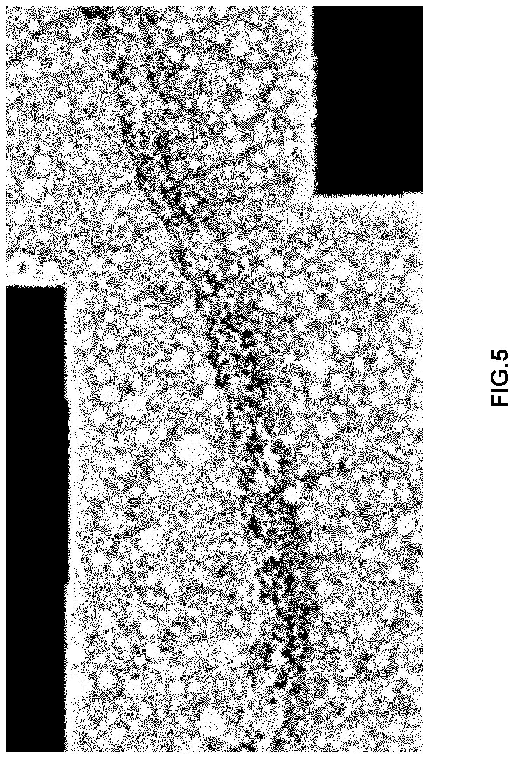

Les résultats sont présentés en figure 5 et montrent un manque d'homogénéité à plusieurs endroits de la mèche imprégnée ainsi qu'une porosité importante et une mauvaise répartition des fibres.

## Exemple 2 : Matériau fibreux (fibre de carbone Zoltek, 50K) monocouche imprégné par du MPMDT/10T

Le mode opératoire suivant a été effectué:
Quatre rouleaux cylindriques et fixes de diamètre 8 cm sont présents en amont de la cuve comprenant le lit fluidisé sue lesquels défile la mèche.
Les rouleaux sont distants de 54 cm (distance entre le premier et le dernier rouleau)

## Etape de pré-imprégnation par lit fluidisé

- Un rouleau de compression cylindrique $R_1$ dans la cuve (L= 500 mm, I= 500mm, H= 600mm), diamètre 25 mm.
- Temps de séjour de 0,3 sec dans la poudre
- Angle $\alpha_1$ de 25°
- D50 =115 $\mu$m, (D10=49$\mu$m, D90= 207$\mu$m) pour la poudre de MPMDT/10T.
- bord de la cuve équipé d'un rouleau fixe.

## Etape de chauffage

Le système de chauffage utilisé est celui décrit dans la figure 4 mais avec huit rouleaux cylindriques $R'_1$ à $R'_8$ fixes de diamètre 8 mm.
La vitesse d'avancement de la mèche est de 10 m/min
L'infrarouge utilisé présente une puissance de 25 kW, la hauteur entre l'infrarouge et le rouleau supérieur est de 4 cm et la hauteur entre l'infrarouge et les rouleaux inférieurs est de 9 cm.

Les angles $\alpha'_1$ à $\alpha'_8$ sont identiques et de 25°.
La hauteur h est de 20 mm
La longueur l est de 1000 mm
Les huit rouleaux sont distants chacun de 43 mm.
Calandrage au moyen de deux calandres montées en série équipées d'un IR de 1kW chacune après l'étape de chauffage.

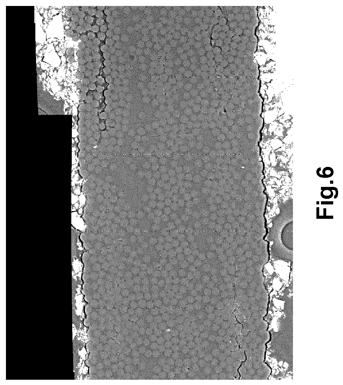

La figure 6 présente le matériau fibreux imprégné obtenu.
Le matériau fibreux obtenu est un matériau monocouche qui présente une homogénéité d'imprégnation et une faible porosité avec une très bonne répartition des fibres.

## Exemple 3 : Détermination du taux de porosité par analyse d'image

La porosité a été déterminée par analyse d'image sur une mèche de fibre de carbone 50K imprégnée par du MPMDT/10T en lit fluidisé suivie d'une étape de chauffage telle que définies ci-dessus.
Elle est de moins de 5%.

## Exemple 4 : Détermination du taux de porosité l'écart relatif entre densité théorique et densité expérimentale (méthode générale)

a) Les données requises sont :

- La densité de la matrice thermoplastique
- La densité des fibres
- Le grammage du renfort :

  • masse linéique (g/m) par exemple pour une tape ¼ de pouce (issu d'un seul rowing)
  • masse surfacique (g/m$^2$) par exemple pour une tape plus large ou un tissu

b) Mesures à réaliser :

Le nombre d'échantillons doit être au minimum de 30 pour que le résultat soit représentatif du matériau étudié.
Les mesures à réaliser sont :

- La dimension des échantillons prélevés:

  ∘ Longueur (si masse linéique connue).
  ∘ Longueur et largeur (si masse surfacique connue).

- La densité expérimentale des échantillons prélevés :

  ∘ Mesures de masse dans l'air et dans l'eau.

- La mesure du taux de fibres est déterminée selon ISO 1172 :1999 ou par analyse thermogravimétrique (ATG) telle que déterminé par exemple dans le document B. Benzler, Applikationslabor, Mettler Toledo, Giesen, UserCom 1/2001.

La mesure du taux de fibres de carbone peut être déterminée selon ISO 14127 :2008.

Détermination du taux de fibres massique théorique :

a) Détermination du taux de fibres massique théorique :

$$\%Mf_{th} = \frac{m_l.L}{Me_{air}}$$

Avec

$m_l$ la masse linéique de la tape,
$L$ la longueur de l'échantillon et
$Me_{air}$ la masse de l'échantillon mesuré dans l'air.

La variation du taux massique de fibres est supposée être directement liée à une variation du taux de matrice sans prendre en compte la variation de la quantité des fibres dans le renfort.

b) Détermination de la densité théorique :

$$d_{th} = \frac{1}{\frac{1 - \%Mf_{th}}{d_m} + \frac{\%Mf_{th}}{d_f}}$$

Avec $d_m$ et $d_f$ les densités respectives de la matrice et des fibres.
La densité théorique ainsi calculée est la densité accessible s'il n'y a aucune porosité dans les échantillons.

c) Evaluation de la porosité :
La porosité est alors l'écart relatif entre densité théorique et densité expérimentale.

**Revendications**

1. Matériau fibreux imprégné comprenant un matériau fibreux en fibres continues et au moins une matrice polymère thermoplastique, caractérisé en en ce que ledit au moins polymère thermoplastique est un polymère amorphe non réactif dont la température de transition vitreuse est telle que $Tg \geq 80°C$, notamment $Tg \geq 100°C$, en particulier $\geq 120°C$, notamment $\geq 140°C$, ou un polymère semi-cristallin non réactif dont la température de fusion $Tf \geq 150°C$, le taux de fibres en volume est constant dans au moins 70% du volume de la bande ou ruban, notamment dans au moins 80% du volume de la bande ou ruban, en particulier dans au moins 90% du volume de la bande ou ruban, plus particulièrement dans au moins 95% du volume de la bande ou ruban, le taux de fibres dans ledit matériau fibreux pré-imprégné étant compris de 45 à 65 % en volume, de préférence de 50 à 60% en volume, notamment de 54 à 60% sur les deux faces dudit matériau fibreux, le taux de porosité dans ledit matériau fibreux pré-imprégné étant inférieur à 10%, notamment inférieur à 5%, en particulier inférieur à 2%,
ledit matériau fibreux imprégné étant dépourvu de polymères à cristaux liquides (LCP).

2. Matériau fibreux imprégné selon la revendication 1, **caractérisé en ce que** ledit matériau est non flexible.

3. Matériau fibreux imprégné selon la revendication 1 ou 2, **caractérisé en ce que** le nombre de fibres dans ledit matériau fibreux pour des fibres de carbone est supérieur ou égal à 30K, préférentiellement supérieur ou égal à 50K ou le grammage pour la fibre de verre est supérieur ou égal à 1200 Tex, notamment supérieur ou égal à 2400 Tex, supérieur ou égal à 4800 Tex.

4. Matériau fibreux imprégné selon l'une des revendications 1 à 3, **caractérisé en ce que** ledit matériau fibreux imprégné est monocouche.

5. Matériau fibreux imprégné selon l'une des revendications 1 à 4, **caractérisé en ce que** ledit au moins polymère thermoplastique est sélectionné parmi : les polyaryl éther cétones (PAEK), en particulier le poly(éther éther cétone) (PEEK) ; les polyaryl éther cétone cétone (PAEKK), en particulier le poly(éther cétone cétone) (PEKK) ; les polyéther-imides (PEI) aromatiques ; les polyaryl sulfones, en particulier les polyphénylène sulfones (PPSU) ; les polyarylsulfures, en particulier les polyphénylène sulfures (PPS) ; les polyamides (PA), en particulier polyamides semi-aromatiques (polyphthalamides) éventuellement modifiées par unités urées ; les PEBA, les polyacrylates en particulier le polyméthacrylate de méthyle (PMMA) ; les polyoléfines, en particulier le polypropylène, l'acide polylactique (PLA), l'alcool polyvinylique (PVA), et les polymères fluorés en particulier le polyfluorure de vinylidène (PVDF) ou le polytetrafluoroéthylène (PTFE) ou le polychlorotrifluoroéthylène (PCTFE); et leurs mélanges, notamment un mélange de PEKK et de PEI, de préférence de 90-10% en poids à 60-40% en poids, en particulier de 90-10% en poids à 70-30% en poids.

6. Matériau fibreux imprégné selon l'une des revendications 1 à 5, **caractérisé en ce que** le ledit au moins polymère thermoplastique est sélectionné parmi les polyamides, le PEKK, le PEI et un mélange PEKK et de PEI.

7. Matériau fibreux imprégné selon la revendication 6, **caractérisé en ce que** ledit polyamide est choisi parmi les polyamides aliphatiques, les polyamides cycloaliphatiques et les polyamides semi-aromatiques (polyphthalamides).

8. Matériau fibreux imprégné selon la revendication 7, **caractérisé en ce que** ledit polyamide aliphatique est choisi parmi le polyamide 6 (PA-6), le polyamide 11 (PA-11), le polyamide 12 (PA-12), le polyamide 66 (PA-66), le polyamide 46 (PA-46), le polyamide 610 (PA-610), le polyamide 612 (PA-612), le polyamide 1010 (PA-1010), le polyamide 1012 (PA-1012), le polyamide 11/1010, le polyamide 12/1010, ou un mélange de ceux-ci ou un copolyamide de ceux-ci, et les copolymères blocs, notamment polyamide/polyéther (PEBA),et ledit polyamide semi-aromatique est un polyamide semi-aromatique, éventuellement modifié par des unités urées notamment un MXD6 et un MXD10 ou un polyamide semi-aromatique de formule X/YAr, notamment un polyamide semi-aromatique de formule A/XT dans laquelle A est choisi parmi un motif obtenu à partir d'un aminoacide, un motif obtenu à partir d'un lactame et un motif répondant à la formule (diamine en Ca).(diacide en Cb), avec a représentant le nombre d'atomes de carbone de la diamine et b représentant le nombre d'atome de carbone du diacide, a et b étant chacun compris entre 4 et 36, avantageusement entre 9 et 18, le motif (diamine en Ca) étant choisi parmi les diamines aliphatiques, linéaires ou ramifiés, les diamines cycloaliphatiques et les diamines alkylaromatiques et le motif (diacide en Cb) étant choisi parmi les diacides aliphatiques, linéaires ou ramifiés, les diacides cycloaliphatiques et les diacides aromatiques; X.T désigne un motif obtenu à partir de la polycondensation d'une diamine en Cx et de l'acide téréphtalique, avec x représentant le nombre d'atomes de carbone de la diamine en Cx, x étant compris entre 6 et 36, avantageusement entre 9 et 18, notamment un polyamide de formule A/6T, A/9T, A/10T ou A/11T, A étant tel que défini ci-dessus, en particulier un polyamide PA 6/6T, un PA 66/6T, un PA 6I/6T, un PA MPMDT/6T, un PA PA11/10T, un PA 11/6T/10T, un PA MXDT/10, un PA MPMDT/10T, un PA BACT/10T, un PA BACT/6T, un PA BACT/10T/6T,

9. Matériau fibreux imprégné selon l'une des revendications 1 à 8, **caractérisé en ce que** ledit matériau fibreux comprend des fibres continues sélectionnées parmi les fibres de carbone, de verre, de carbure de silicium, de basalte, de silice, les fibres naturelles en particulier de lin ou de chanvre, de lignine, de bambou, de sisal, de soie, ou cellulosiques en particulier de viscose, ou les fibres thermoplastiques amorphes de température de transition vitreuse Tg supérieure à la Tg dudit polymère ou dudit mélange de polymères lorsque ce dernier est amorphe ou supérieure à la Tf dudit polymère ou dudit mélange de polymères lorsque ce dernier est semi-cristallin, ou les fibres thermoplastiques semi-cristallines de température de fusion Tf supérieure à la Tg dudit polymère ou dudit mélange de polymères lorsque ce dernier est amorphe ou supérieure à la Tf dudit polymère ou dudit mélange de polymères lorsque ce dernier est semi-cristallin, ou un mélange de deux ou de plusieurs desdites fibres, de préférence un mélange de fibres de carbone, de verre ou de carbure de silicium, en particulier des fibres de carbone.

10. Matériau fibreux imprégné selon l'une des revendications 1 à 9, **caractérisé en ce que** ledit polymère thermoplastique comprend en outre des charges carbonées, en particulier du noir de carbone ou des nanocharges carbonées, de préférence choisies parmi des nanocharges carbonées, en particulier des graphènes et/ou des nanotubes de carbone et/ou des nanofibrilles de carbone ou leurs mélanges.

11. Matériau fibreux imprégné selon l'une des revendications 1 à 10, **caractérisé en ce que** le dit prépolymère thermoplastique comprend en outre des polymères à cristaux liquides ou du poly(butylène téréphtalate) cyclisé, ou des mélanges contenant lesdits polymères à cristaux liquides ou ledit poly(butylène téréphtalate) cyclisé en tant qu'additifs.

12. Utilisation d'un matériau fibreux imprégné, tel que défini dans l'une des revendications 1 à 11, pour la préparation de rubans calibrés adaptés à la fabrication de pièces composites en trois dimensions, par dépose automatique desdits rubans au moyen d'un robot.

13. Ruban comprenant au moins un matériau fibreux tel que défini dans l'une des revendications 1 à 11.

14. Ruban selon la revendication 13, **caractérisé en ce qu'**il est réalisé en un ruban unique unidirectionnel ou en une pluralité de rubans parallèles unidirectionnels.

15. Ruban selon l'une des revendications 13 ou 14, **caractérisé en ce qu'**il a une largeur (l) et une épaisseur (ep) adaptées à une dépose par robot dans la fabrication de pièces en trois dimensions, sans besoin de refente, et de préférence a une largeur (l) d'au moins 5 mm et pouvant aller jusqu'à 400mm, de préférence comprise entre 5 et 50 mm et de manière encore plus préférée comprise entre 5 et 15mm.

16. Ruban selon l'une des revendications 13 à 15, **caractérisé en ce que** le polymère thermoplastique est un polyamide choisi parmi notamment un polyamide aliphatique PA 6, PA 11, PA 12, PA 66, PA 46, PA 610, PA 612, PA 1010, PA 1012, PA 11/1010 ou PA 12/1010 ou un polyamide semi-aromatique tel que un PA MXD6 et un PA MXD10 ou choisi parmi PA 6/6T, PA 6I/6T, PA 66/6T, PA 11/10T, PA 11/6T/10T, PA MXDT/10T, PA MPMDT/10T, PA BACT/6T, PA BACT/10T et PA BACT/10T/6T, un PVDF, un PEEK, PEKK et un PEI ou un mélange de ceux-ci.

17. Ruban selon la revendication 16, **caractérisé en ce que** le polymère thermoplastique est un polyamide choisi parmi notamment un polyamide aliphatique tel que PA 6, PA 11, PA 12, PA 11/1010 ou PA 12/1010 ou un polyamide semi-aromatique choisi parmi PA 6/6T, PA 6I/6T, PA 66/6T, PA 11/10T, PA 11/6T/10T, PA MXDT/10T, PA MPMDT/10T et PA BACT/10T.

18. Utilisation d'un ruban, tel que défini selon l'une des revendications 13 à 17, dans la fabrication de pièces composites en trois dimensions.

19. Utilisation selon la revendication 18, **caractérisée en ce que** ladite fabrication desdites pièces composites concerne les domaines des transports, en particulier automobile, du pétrole et du gaz, en particulier l'offshore, du stockage de gaz, aéronautique, nautique, ferroviaire ; des énergies renouvelables, en particulier éolienne, hydrolienne, les dispositifs de stockage d'énergie, les panneaux solaires ; des panneaux de protection thermique ; des sports et loisirs, de la santé et du médical et de l'électronique.

20. Pièce composite en trois dimensions, **caractérisée en ce qu'**elle résulte de l'utilisation d'au moins un ruban unidirectionnel de matériau fibreux imprégné tel que défini selon l'une des revendications 13 à 17.

FIG.1

Entrée d'air

Angle $\alpha_1$

24

Lit fluidisé

Entrée d'air

FIG.2

**FIG.3**

FIG.4

FIG.5

Fig.6

Europäisches
Patentamt

European
Patent Office

Office européen
des brevets

# RAPPORT DE RECHERCHE EUROPEENNE

Numéro de la demande

EP 21 18 7016

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | US 2017/165875 A1 (GAILLARD PATRICE [FR] ET AL) 15 juin 2017 (2017-06-15) * revendications; exemples * | 1-20 | INV. C08J5/10 C08J5/24 C08J5/04 C08K3/04 |
| A | WO 2017/017388 A1 (ARKEMA FRANCE [FR]) 2 février 2017 (2017-02-02) * page 1, lignes 1-36; revendications * * page 6, lignes 17-21 * * page 12, lignes 4-5 * * page 5, ligne 28 - page 6, ligne 5 * | 1-20 | |
| A | FR 2 997 089 A1 (ARKEMA FRANCE [FR]) 25 avril 2014 (2014-04-25) * page 1, lignes 1-9; revendications * | 1-20 | |
| A | FR 2 997 036 A1 (ARKEMA FRANCE [FR]; LE POLE DE PLASTURGIE DE L EST [FR]) 25 avril 2014 (2014-04-25) * revendications; exemples * | 1-20 | |
| A | FR 3 017 330 A1 (ARKEMA FRANCE [FR]) 14 août 2015 (2015-08-14) * revendications; exemples * | 1-20 | DOMAINES TECHNIQUES RECHERCHES (IPC) C08J |

Le présent rapport a été établi pour toutes les revendications

| Lieu de la recherche | Date d'achèvement de la recherche | Examinateur |
|---|---|---|
| Munich | 7 décembre 2021 | Frison, Céline |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 21 18 7016

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-12-2021

| Document brevet cité au rapport de recherche | Date de publication | Membre(s) de la famille de brevet(s) | | Date de publication |
|---|---|---|---|---|
| US 2017165875 A1 | 15-06-2017 | CN | 106163756 A | 23-11-2016 |
| | | CN | 110126124 A | 16-08-2019 |
| | | EP | 3105025 A2 | 21-12-2016 |
| | | EP | 3446845 A1 | 27-02-2019 |
| | | ES | 2749863 T3 | 24-03-2020 |
| | | ES | 2834886 T3 | 21-06-2021 |
| | | FR | 3017329 A1 | 14-08-2015 |
| | | JP | 6450773 B2 | 09-01-2019 |
| | | JP | 2017507045 A | 16-03-2017 |
| | | KR | 20160110445 A | 21-09-2016 |
| | | US | 2017165875 A1 | 15-06-2017 |
| | | WO | 2015121583 A2 | 20-08-2015 |
| WO 2017017388 A1 | 02-02-2017 | FR | 3039554 A1 | 03-02-2017 |
| | | WO | 2017017388 A1 | 02-02-2017 |
| FR 2997089 A1 | 25-04-2014 | CN | 104884503 A | 02-09-2015 |
| | | CN | 109593354 A | 09-04-2019 |
| | | EP | 2912096 A1 | 02-09-2015 |
| | | EP | 3002306 A1 | 06-04-2016 |
| | | FR | 2997089 A1 | 25-04-2014 |
| | | JP | 6395715 B2 | 26-09-2018 |
| | | JP | 2015533908 A | 26-11-2015 |
| | | JP | 2017160426 A | 14-09-2017 |
| | | US | 2015267050 A1 | 24-09-2015 |
| | | US | 2017335107 A1 | 23-11-2017 |
| | | WO | 2014064375 A1 | 01-05-2014 |
| FR 2997036 A1 | 25-04-2014 | EP | 2911867 A1 | 02-09-2015 |
| | | FR | 2997036 A1 | 25-04-2014 |
| | | US | 2015258742 A1 | 17-09-2015 |
| | | WO | 2014064377 A1 | 01-05-2014 |
| FR 3017330 A1 | 14-08-2015 | CN | 106163776 A | 23-11-2016 |
| | | EP | 3105026 A2 | 21-12-2016 |
| | | ES | 2793943 T3 | 17-11-2020 |
| | | FR | 3017330 A1 | 14-08-2015 |
| | | JP | 6495932 B2 | 03-04-2019 |
| | | JP | 2017505853 A | 23-02-2017 |
| | | KR | 20160110446 A | 21-09-2016 |
| | | US | 2016347009 A1 | 01-12-2016 |
| | | WO | 2015121584 A2 | 20-08-2015 |

EPO FORM P0460

Pour tout renseignement concernant cette annexe : voir Journal Officiel de l'Office européen des brevets, No.12/82

# EP 3 940 021 A1

## RÉFÉRENCES CITÉES DANS LA DESCRIPTION

**Documents brevets cités dans la description**

- WO 2012066241 A2
- US 20140005331 A1
- EP 0324680 A
- EP 0406067 A
- EP 0201367 A
- WO 2016062896 A
- WO 2008135663 A
- WO 2015121583 A
- EP 0335186 A
- WO 2017017388 A
- EP 1505099 A